(19) 

Europäisches
Patentamt
European
Patent Office
Office européen
des brevets

(11) **EP 4 470 746 A1**

(12) **EUROPEAN PATENT APPLICATION**

(43) Date of publication:
**04.12.2024 Bulletin 2024/49**

(21) Application number: **24175722.8**

(22) Date of filing: **14.05.2024**

(51) International Patent Classification (IPC):
**B29C 48/32** $^{(2019.01)}$    **B29C 48/30** $^{(2019.01)}$
**B29C 48/09** $^{(2019.01)}$    **B29C 44/20** $^{(2006.01)}$
**B29C 48/92** $^{(2019.01)}$    B29C 44/34 $^{(2006.01)}$
**B29C 44/60** $^{(2006.01)}$

(52) Cooperative Patent Classification (CPC):
**B29C 48/3001; B29C 48/3003; B29C 48/32;**
**B29C 48/92;** B29C 44/35; B29C 44/60;
B29C 48/0012

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.05.2023 JP 2023090261**

(71) Applicant: **Ricoh Company, Ltd.**
**Tokyo 143-8555 (JP)**

(72) Inventor: **TANAKA, Takashi**
**Tokyo, 143-8555 (JP)**

(74) Representative: **J A Kemp LLP**
**80 Turnmill Street**
**London EC1M 5QU (GB)**

(54) **FLOW PATH FORMING DEVICE, EXTRUSION DEVICE, AND FORMED PLASTIC SHEET**

(57)     A flow path forming device (5) is provided that includes: a first flow path forming member (10) having a first flow path forming surface (40); and a second flow path forming member (20) having a second flow path forming surface (50). The first flow path forming surface (40) and the second flow path forming surface (50) form a flow path (30) through which a plastic composition flows. When a water droplet is deposited on a droplet deposition surface of each of the first flow path forming surface (40) and the second flow path forming surface (50), and the droplet deposition surface on which the water droplet is deposited is tilted to measure a maximum droplet weight, an average value of the maximum droplet weight on the first flow path forming surface (40) and the maximum droplet weight on the second flow path forming surface (50) is 8 $\mu$g or more and 25 $\mu$g or less.

**FIG. 1**

**Description**

BACKGROUND

Technical Field

The present disclosure relates to a flow path forming device, an extrusion device, and a foamed plastic sheet.

Related Art

Conventionally, a flow path forming device is known that includes a first flow path forming member and a second flow path forming member and in which the first flow path forming member and the second flow path forming member form a flow path through which a plastic composition flows.

Japanese Patent No. 2896832 discloses a configuration in which a mold for an extruded thermoplastic resin foam serves as the above-mentioned flow path forming device and a contact angle of a flow path forming surface of the mold with a molten resin is from 45° to 65° in a range from an outlet port of the flow path to 5 mm upstream in a flow direction of the molten resin. It is described therein that when the contact angle with the molten resin is from 45° to 65°, appropriate sliding properties of the molten resin on the flow path forming surface can be obtained, the surface of the molded product is prevented from becoming rough and the appearance of the molded product is improved. It is also described that an adequate pressure is maintained in the vicinity of the outlet port of the flow path, and thus, the occurrence of uneven thickness in the molded product is prevented.

However, there is room for improvement in preventing the occurrence of uneven thickness and improving the appearance.

SUMMARY

To solve the above-mentioned problems, embodiments of the present invention provide a flow path forming device including: a first flow path forming member having a first flow path forming surface; and a second flow path forming member having a second flow path forming surface. The first flow path forming surface of the first flow path forming member and the second flow path forming surface of the second flow path forming member form a flow path through which a plastic composition flows. When a water droplet is deposited on a droplet deposition surface of each of the first flow path forming surface and the second flow path forming surface, where the droplet deposition surface is in a range from an outlet port of the flow path to 3 mm upstream in a flow direction of the plastic composition, and the droplet deposition surface on which the water droplet is deposited is tilted from a state parallel to a horizontal direction to a state parallel to a vertical direction, to measure a maximum droplet weight at which the water droplet does not slide down from the droplet deposition surface, an average value of the maximum droplet weight on the first flow path forming surface and the maximum droplet weight on the second flow path forming surface is 8 $\mu$g or more and 25 $\mu$g or less.

According to embodiments of the present invention, a molded product can be obtained in which the occurrence of uneven thickness is prevented and the appearance is improved.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic cross-sectional view of a flow path forming device;
FIG. 2 is a schematic diagram illustrating a kneading device;
FIG. 3 is a diagram illustrating an extrusion molding device;
FIG. 4A is a graph illustrating a relationship between deviation and a maximum droplet weight; and
FIG. 4B is a graph illustrating a relationship between an appearance defect and the maximum droplet weight.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

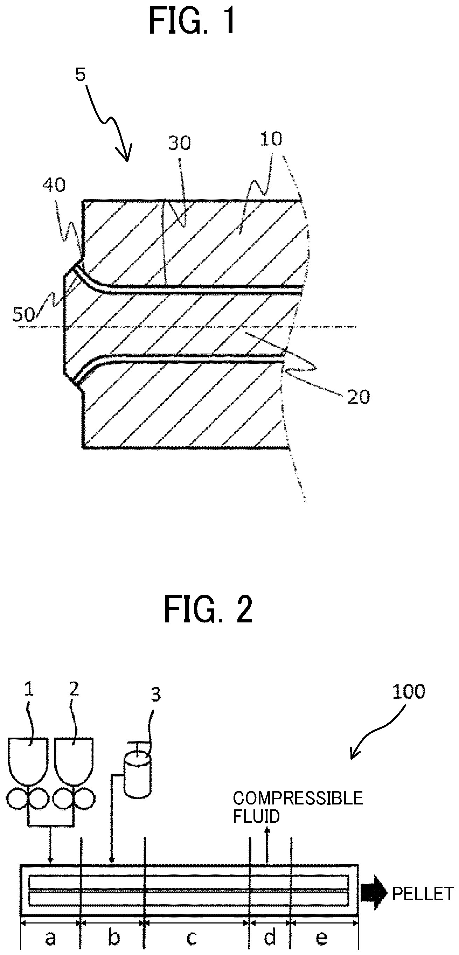

FIG. 1 is a schematic cross-sectional view of a flow path forming device 5 according to the present embodiment.

The type of the flow path forming device (may be referred to as a "mold," "die," or "nozzle" hereinafter) is not particularly limited and can be appropriately selected according to a purpose. Specific examples of the flow path forming device include, but are not limited to, a T-die, a flat die, a seamless die, a circular die, a single heart die, a double heart die, a spiral die, a bridge die, a spider die, a tournament die, a coat hanger die, a manifold die, and composite dies of these dies.

Among these dies, the seamless die is preferred, and the circular die is more preferred, to mold a foamed sheet by using a nonflammable gas as a foaming agent.

In the example illustrated in FIG. 1, the flow path forming device 5 of the present embodiment includes a first flow path forming member 10 and a second flow path forming member 20 facing the first flow path forming member 10, and if desired, further includes other members.

The first flow path forming member 10 has a through hole, and the second flow path forming member 20 is inserted into the through hole to form a flow path 30 having an annular shape through which a plastic composition containing at least one type of plastic flows.

An inner circumferential surface of the through hole of the first flow path forming member 10 forms a first flow path forming surface 40 forming the flow path 30 mentioned above, and an outer circumferential surface of the second flow path forming member 20 forms a second flow path forming surface 50 forming the flow path 30.

In the present embodiment, a plastic composition containing at least one type of plastic is passed through the flow path 30, and the plastic composition is extruded from an outlet port of the flow path 30, to form a foamed plastic sheet as a molded product.

If the flow path forming surfaces 40 and 50 have poor sliding properties with respect to the plastic composition, a surface of the molded product may be rough due to friction between the flow path forming surfaces and the plastic composition, and thus, the molded product may have an appearance defect. On the other hand, if the sliding properties of the flow path forming surfaces 40 and 50 with respect to the plastic composition are too good, a back pressure, which is an internal pressure of the flow path 30 used for extrusion, is insufficient and the plastic composition does not stably flow within the flow path 30. As a result, a plastic composition is not stably discharged from the outlet port of the flow part, for example, a deviation in the discharge amount of the plastic composition from the outlet port of the flow path in a circumferential direction increases, or the discharge amount fluctuates in units of several minutes. As a result, the thickness of the molded product is uneven, that is, uneven thickness occurs.

If the flow path forming surfaces 40 and 50 do not have appropriate sliding properties with respect to the plastic composition (i.e., the flow resistance of the plastic composition with respect to the flow path forming surface is inappropriate), uneven thickness may occur over time. Further, if the flow path forming surfaces 40 and 50 have inappropriate sliding properties with respect to the plastic composition, it is difficult to keep the pressure loss on the entire flow path within the pressure resistance of the device. Further, to keep the pressure loss on the entire flow path within a certain range, it is desired to widen the clearance of the lip gap. As a result, the clearance does not match the molded product (the foamed plastic sheet) to be manufactured, and when a nonflammable gas is used as a foaming agent, premature foaming may occur in the flow path. Therefore, it is not possible to obtain the molded product in a desired state. Moreover, the flow path tends to become more difficult to clean.

Conventionally, a contact angle of the flow path forming surface with a fluid such as water or a molten resin is used to determine whether the flow path forming surfaces 40 and 50 have appropriate sliding properties with respect to a plastic composition (i.e., whether the flow resistance of the plastic composition with respect to the flow path forming surfaces is appropriate). However, even if the contact angle of the flow path forming surface is set within a range that provides appropriate sliding properties, the appearance defect of the sheet may not be reduced and the discharge may not be stable. It was found that the sliding properties of the flow path forming surface cannot be suitably defined by the contact angle.

As a result of diligent research, it was found that, by specifying the sliding properties as described below, the sliding properties of the flow path forming surface (i.e., the flow resistance of the plastic composition) can be kept within a more appropriate range than when being specified by the contact angle. Specifically, water droplets are deposited on a flow path forming surface and a droplet deposition surface on which the water droplets are deposited is tilted from a state parallel to a horizontal direction to a state parallel to a vertical direction, to define a maximum droplet weight at which the droplets do not slide down from the droplet deposition surface. As illustrated in a verification experiment described later, when the average value of the maximum droplet weight on the flow path forming surface 40 and the maximum droplet weight on the flow path forming surface 50 is 8 μg or more and 25 μg or less, preferably 10 μg or more and 15 μg or less, a deterioration in the appearance of the molded product due to friction between the flow path forming surface and the plastic composition is reduced, the discharge stability of the plastic composition from the flow path outlet port is improved, and the occurrence of uneven thickness of the molded product is prevented.

Further, by keeping the average value of the maximum droplet weight within the above-mentioned range and providing the flow path forming surfaces 40 and 50 with appropriate sliding properties to ensure stable discharge from the flow path outlet port, the degree of freedom in the flow path design is increased. This makes it easy to create a flow path design in which a clearance to ensure a desired back pressure matches the molded product (the foamed plastic sheet) to be manufactured. Therefore, a molded product in a desired state can be easily obtained. Further, by increasing the degree of freedom in the design of the flow path, the flow path can be designed to be easily cleanable when changing setups.

The water droplets are caused to deposit on the flow path forming surface within a range of 3 mm upstream from the outlet port of the flow path 30 in a flow direction of the plastic composition, and preferably, at least within this range of 3 mm, the average value of the maximum droplet weight on the flow path forming surface 40 and the maximum droplet weight on the flow path forming surface 50 is kept within the range mentioned above. Thus, the flow resistance of the plastic composition with respect to the flow path forming surface immediately before foaming can be set within an appropriate range, and an appearance defect of the plastic composition due to friction between the flow path forming surface and the sheet can be prevented, while maintaining the flow stability of the plastic composition.

[Method of Measuring Maximum Droplet Weight]

A method of measuring the maximum droplet weight at which the droplet does not slide down from the flow path forming surface is not particularly limited and can be appropriately selected according to a purpose. Specifically, the method includes confirming that a droplet in an amount determined in advance can be added dropwise by using a commercially available contact angle meter, a syringe having a micrometer head, and a pipetter. If desired, the method includes confirming a correspondence relation between a droplet volume and a droplet weight by using a commercially available electronic balance.

Subsequently, water droplets are deposited on the flow path forming surface within a range of 3 mm upstream from the outlet port of the flow path 30 in the flow direction of the plastic composition.

At this time, the droplet volume may be directly estimated by using software provided in various types of contact angle meters. Before the water droplet is deposited, a surface of the flow path forming surface on which the water droplet is to be deposited is wiped by using a solvent having strong degreasing power, or an alcohol, a parts cleaner, and the like. It is preferable to repeatedly and thoroughly wipe the surface with a clean cloth until the surface is dry, and avoid applying unnecessary friction after drying. This is to prevent measurement results from varying due to frictional electrification or changes in an adsorbed substance. Further, for the same reason, it is also not preferable to use air blowing after wiping off the solvent.

Next, the droplet deposition surface of the flow path forming surface is tilted from a state parallel to the horizontal direction to a state parallel to the vertical direction. At this time, the droplet deposition surface may be tilted by using a rotatably movable stage, or may be tilted by using a crane or a reversing machine. However, it is preferable to experimentally confirm that no vibration affecting the measurement is applied.

Moreover, as can be seen from FIG. 1, the flow path forming surface where the water droplet is to be deposited generally has a curved surface within a range of 3 mm upstream from the outlet port of the flow path 30 in the flow direction of the plastic composition. Therefore, at this time, a virtual plane that contacts the flow path forming surface at the center point of a droplet is treated as the droplet deposition surface and is tilted until a state parallel to the vertical direction. That is, it is sufficient to regard the droplet deposition surface as a plane contacting a curved surface and obtain average data. However, if there is a flat region (a region having a linear shape in FIG. 1) of the flow path forming surface within a range of 3 mm upstream from the outlet port of the flow path 30 in the flow direction of the plastic composition, the water droplet is caused to deposit in the flat region.

In determining whether a droplet has slid down from the flow path forming surface, the droplet is determined to have slid down when the amount of sliding down of the droplet is 1 mm or more in a period of 1 minute from 3 seconds after the flow path forming surface reaches a vertical position. Further, by comparing an image before tilting the flow path forming surface to a state parallel to the vertical direction and an image after tilting the flow path forming surface to the state parallel to the vertical direction, the water droplet may be determined to have slid down when a downward movement of an upper part of the water droplet in the vertical direction, which forms the contact angle, is confirmed. Note that a method of determining whether a droplet has slid down is not limited to these methods, and any method which can confirm the movement of the entire droplet may be used.

General basic operations for measuring the contact angle conform to Japanese Industrial Standards (JIS) R 3257. In the verification experiment described later, sweeping was implemented at a droplet weight of 5 $\mu$g, 8 $\mu$g, 10 $\mu$g, 15 $\mu$g, and 5 $\mu$g increments thereafter. However, sweeping of the droplet weight can be appropriately changed in accordance with an error for which a true value is to be determined.

Further, a contact angle of the first flow path forming surface 40 and the second flow path forming surface 50 with respect to water is not particularly limited and can be appropriately selected according to a purpose, but is preferably 55° or more and less than 110°. When the contact angle is within this range, the above-mentioned range can be achieved by using a comparably inexpensive treatment, and there is no need to perform a hydrophilic treatment or an expensive water repellent treatment such as fine processing including fractal processing on the flow path surface.

[Method of Measuring Contact Angle]

A method of measuring the contact angle is not particularly limited and can be appropriately selected according to a purpose. For example, the contact angle may be measured by a method in conformity with JIS R 3257. The contact angle was measured with a droplet in an amount in a range from about 0.5 $\mu$l to about 4 $\mu$l, and if a peak was observed, a maximum value of the peak was used. When the droplet amount is small, such as a droplet amount below 0.5 $\mu$l, there is a risk of an error in which a low contact angle is obtained due to the influence of the nozzle diameter and the like. By contrast, when the droplet amount is large, such as a droplet amount exceeding 4 $\mu$l, there is a risk of an error in which a low contact angle is obtained due to an impact when the liquid separates from the nozzle.

Note that the droplet amount is preferably about 1.5 $\mu$l when the contact angle is approximately constant regardless of the droplet amount. Note that a nozzle-less contact angle meter may be used to measure the contact angle.

The angle does not necessarily have to be calculated by the method in conformity with JIS R 3257. As long as consistency is guaranteed, image processing of an image captured of a side surface of a droplet or an image captured of a top surface of a droplet may be used.

Further, it is preferable that an arithmetic mean roughness Ra of at least one of the flow path forming surfaces including the flow path forming surface 40 and the flow path forming surface 50 is less than 1.5, and a roughness curve element average length Rsm is 60 $\mu$m or more. Further, it is more preferable that the arithmetic mean roughness Ra of the flow path forming surface of the flow path forming surface 40 or the flow path forming surface 50 is less than 1.3, and the roughness curve element average length Rsm is 67 $\mu$m or more. Particularly preferably, the arithmetic mean roughness Ra is 0.2 or more and less than 1.3, and the roughness curve element average length Rsm is 67 $\mu$m or more and less than 106. Further, it is preferable that a core portion level difference Rk of at least one of the flow path forming surfaces including the flow path forming surface 40 and the flow path forming surface 50 is 1.0 $\mu$m or more. Thus, it is possible to prevent a rough shape from being transferred to the molded product due to an unnecessarily rough shape of the flow path and prevent the resulting increase in the surface roughness of the molded product, so that the sliding properties of the flow path forming surface can be maintained within an appropriate range.

[Method of Measuring Surface Roughness Parameter]

A method of measuring the above-mentioned surface roughness parameters Rsm, Ra, and Rk is not particularly limited. For example, the surface roughness parameters Rsm, Ra, and Rk may be measured by using a portable roughness meter such as a VK-X250 manufactured by Keyence Corporation and an SJ-210 manufactured by Mitutoyo Corporation. Examples of measurement conditions when measuring each of the above-described surface roughness parameters Rsm, Ra, and Rk by using the VK-X250 manufactured by Keyence Corporation is described below. Note that the measurement conditions are not limited to those below, as long as the measurement conditions conform to those below and, if there is a correlation relationship between instrumental errors, the correlation relationship is known in advance.

[Measurement Conditions]

- Measurement device: VK-X250 manufactured by Keyence Corporation
- Brightness: Automatic setting
- Double scan (automatic)
- Measurement mode: Surface shape mode
- Resolution: 1024 x 768
- High precision mode

- RPD: No setting
- Measurement height pitch: 0.1 μm
- Single field of view (no image combining)
- Use of X20 objective lens

[Image Processing/Measurement]

- Plane correction: "Reference plane correction (all regions)"
- Curved surface correction: "Surface wave shape correction strength 3"
- Method of removing binding points
- Measurement of 20 vertical lines in total (average value of 20 locations used for line roughness, but surface roughness may be used instead for parameters in which surface roughness is defined)
- Roughness measurement: No cutoff for both λs and λc, end correction is implemented.

It is preferable that the HRC hardness of at least one among the first flow path forming surface 40 and the second flow path forming surface 50 is 28 or more. If the HRC hardness is 28 or more, the sliding properties of the flow path forming surface can be maintained over time. Therefore, it is possible to prevent friction between the resin and the flow path while maintaining the quality deviation in the circumferential direction and the quality deviation over time of the molded product, and it is possible to prevent the deterioration of the appearance of the molded product over time. This makes it possible to provide a device having low maintenance cost.

The HRC hardness can be measured by a method in conformity with JIS Z 2245. The method of measuring the HRC hardness is a destructive test. Therefore, as long as it can be confirmed in advance that the HRC hardness of the outermost surface can be estimated correctly, other hardness indicators or the tensile test strength may be referred to, or a value obtained by inspecting extracted material may be used.

The materials of the first flow path forming member 10 and the second flow path forming member 20 of the flow path forming device 5 are not particularly limited and can be appropriately selected according to a purpose. Examples of the materials of the first flow path forming member 10 and the second flow path forming member 20 include, but are not limited to, metal, carbon steel, chrome steel, nickel steel, nickel chromium steel, aluminum, plastic, stainless steel, pre-hardened steel, cemented carbide, and high speed steel, that is, S45C, S50C, S55C, A5052, SS400, SUS304, SUS316, SUS420, SKD11, SKH51, HPM-38, SCM415, SCM435, and SCM440.

Various types of coatings may be applied to the surfaces of the first flow path forming member 10 and the second flow path forming member 20 and the flow path forming surfaces 40 and 50. Examples of coating methods include, but are not limited to, hard chrome plating, electroless nickel plating, alumite treatment, black dyeing, Parker, carbide film formation, nitride film formation, oxide film formation, DLC treatment, silicone mold release treatment, and fluorine mold release treatment, that is, coatings including Cr, Ni, Ni-P, amorphous alumina, crystallized alumina, zirconia, TiC, TiCN, TiN, WC, PTFE, ETFE, FEP, PCTFE, PFA, PVDF, composite coatings of these materials, and composite coatings obtained by adding functional aids of plastic to these materials.

A method of forming the materials of the first flow path forming member 10 and the second flow path forming member 20 of the flow path forming device 5 is not particularly limited and can be appropriately selected according to a purpose. Examples of the method include, but are not limited to, cutting, rolling, electrical discharge machining, drawing, polishing, painting, vapor deposition, physical vapor deposition (PVD), chemical vapor deposition (CVD), plating, thermal spraying, and etching. Among these methods, painting has excellent efficiency when experimentally examining various embodiments. Items examined by painting may be mass-produced by using other methods.

In a painting method, it is desirable to have a process of dilution with a solvent, but any painting method may be used, as long as the materials can be processed. From the viewpoint of durability, it is preferable to use a coating that reacts during firing, but the coating is not limited thereto. To maintain the adhesion of the coating, it is preferable to roughen a foundation as much as possible, but the method is not limited thereto. In some cases, it is possible to intentionally form a state where the foundation is exposed and the coating layer remains in a trough portion.

A method of finishing the first flow path forming member 10 and the second flow path forming member 20 of the flow path forming device 5 is not particularly limited and can be appropriately selected according to a purpose. Examples of finishing methods include, but are not limited to, a plasma treatment, an ozone treatment, a thermal aging treatment, a chemical aging treatment, a physical aging treatment, a silane coupling treatment, and glass coating. These methods can, for example, stabilize the number of cracks on a surface plated by hard chrome plating or expand the width of the cracks. These methods can also be used to finely control a maximum droplet weight G mentioned above.

A method of controlling the state of the flow path forming surfaces 40 and 50 by the finishing methods described above may be freely selected from among generally used primer treatments and adhesion improving treatments.

In the case of metals, the thickness of an oxidized layer on the surface may increase and the quality may change over time. However, in such cases, the thermal aging treatment is effective for stable production.

If organic substances are used in the flow path 30, the performance of the flow path 30 may change due to deterioration by heat. Therefore, even in such cases, the thermal aging treatment is effective for stable production. However, a temperature in the heat treatment is preferably higher than a processing temperature. For a similar reason, the flow may be unstable when a new product is used, but the performance may stabilize after several tons of material are processed and discharged. In such a case, it is also effective to perform the above-mentioned aging treatment in advance.

If the maximum droplet weight or the contact angle at which the droplet does not slide down is too small or too large, the surface state of the flow path forming surfaces 40 and 50 can be controlled by performing an adjustment described below. For example, the adjustment can be implemented by lightly wiping the flow path forming surface with a solvent, immersing the flow path forming surface into a solvent, or cautiously applying a paper of approximately #2000 to the flow path forming surface. However, the direction and the width that can be changed vary depending on the material, and thus, it is desirable to appropriately select the direction and the width experimentally. The method of adjusting the maximum droplet weight G and the contact angle by lightly wiping the flow path forming surface with a solvent, immersing the flow path forming surface into a solvent, or cautiously applying a paper of approximately #2000 to the flow path forming surface, may be used as a final treatment. Further, the method of adjusting the maximum droplet weight G and the contact angle may be implemented as a pretreatment to improve the adhesion of the various types of coatings applied to the surfaces of the first flow path forming member 10 and the second flow path forming member 20 and the flow path forming surfaces 40 and 50.

The flow path 30 of the flow path forming device 5 has an annular shape, and the annular shape is not particularly limited and can be appropriately selected according to a purpose. Examples of the shape include, but are not limited to, a circular ring shape, a polygonal ring shape, and a shape in which the diameter increases toward the outlet port of the flow path.

Further, the size of the flow path 30 is not particularly limited and can be appropriately selected according to a purpose, and regardless of the shape of the flow path 30, the diameter of a tip end of the flow path outlet port is preferably 70 mm or more and 160 mm or less. This makes it easier to manufacture sheets having an actual foaming ratio range of about 5 to 30 times without corrugating, and also makes it possible to provide a sheet width of 300 mm or more and 1,300 mm or less, which is desirable as a sheet with of the final commercial product.

A method of forming the shape of the flow path forming surfaces 40 and 50 in the flow path forming device is not particularly limited and can be appropriately selected according to a purpose. For example, the shape of the flow path forming surfaces 40 and 50 can be formed by sandblasting, but the method is not limited thereto. For example, methods such as electrolysis, chemical etching, and machining using a lathe may also be used.

When sandblasting with air is used to form the shape of the flow path forming surfaces 40 and 50, it is known that the roughness of the flow path forming surfaces 40 and 50 can be controlled by controlling the application time, the injection pressure, the distance to the workpiece, the processing angle, the shape of the media, the material of the media, and the like. When using sandblasting, the roughness of the flow path forming surfaces 40 and 50 may vary due to environmental influences such as the hardness of the outermost surface of the workpiece, the configuration of an application equipment, the degree of deterioration of the media, the nozzle shape (the shape of the outlet port of the flow path), and the like.

However, there is a relationship in which, for example, increasing the injection pressure increases the roughness. Therefore, it is possible to obtain any roughness by repeatedly producing trial samples using test pieces or the like made of the same material as the product, for example.

Next, the plastic composition that flows through the flow path 30 of the flow path forming device 5 will be described.

<Plastic Composition>

The plastic composition is a material included in a foamed plastic sheet that is molded by using the flow path forming device 5 described above. The plastic composition contains at least one type of plastic resin, and preferably contains a filler (also referred to as a foam nucleating agent) and a foaming agent, and may further contain other components, if desired.

- Plastic Resin -

The plastic resin is not particularly limited and can be appropriately selected according to a purpose. Examples of the plastic resins include, but are not limited to, styrene-based homopolymers such as polystyrene and poly-p-methylstyrene, styrene-based copolymers such as styrene-maleic anhydride copolymer, styrene-acrylonitrile copolymer, styrene-butadiene copolymer, styrene-acrylonitrile-butadiene copolymer, styrene-acrylic acid copolymer, and styrene-methacrylic acid copolymer, styrene-based resins such as mixtures of polystyrene and polyphenylene oxide, and aliphatic polyester resins such as polylactic acid, polyglycolic acid, poly(3-hydroxybutyrate), poly(3-hydroxybutyrate/3-hydroxyhexanoate), poly(3-hydroxybutyrate/3-hydroxyvalerate), polycaprolactone, polybutylene succinate, and poly(butylene succinate/adipate). These resins may be used alone or in combination of two or more types.

The aliphatic polyester resins may be synthesized by using an alcohol component or a derivative thereof and an acid component or a derivative thereof. Alternatively, a commercially available product may be used as the aliphatic polyester resin.

Among these resins, an aliphatic polyester resin, which is a polymer material having low environmental impact, is preferred, and polylactic acid, which is a carbon-neutral material and relatively inexpensive, is more preferred. Further, polylactic acid is preferred, because polylactic acid has similar properties to conventionally used polystyrene resins and the like, and has a melting point, toughness, and chemical resistance that are higher than in other biodegradable plastics.

Examples of the polylactic acid include, but are not limited to, a copolymer of D-lactic acid and L-lactic acid, a homopolymer of any one among D-lactic acid (D-form) and L-lactic acid (L-form), and ring-opened polymers of at least one type of lactide selected from the group including D-lactide (D-form), L-lactide (L-form), and DL-lactide. These polylactic acids may be used alone or in combination of two or more types. The polylactic acid may be appropriately synthesized, or a commercially available product may be used as the polylactic acid.

The D-form: L-form ratio of the lactic acid included in the polylactic acid is not particularly limited, but it is preferable that any one among the D-form and the L-form of the lactic acid included in the polylactic acid is 95 mol% or more in the polylactic acid. A polylactic acid including only one of the optical isomers, the D-form or the L-form, may be used. A polylactic acid within this range has high crystallinity, and a foamed sheet manufactured by using such a polylactic acid can be expected to have heat resistance and is suitable for food applications and the like.

The content of the plastic resin is not particularly limited and can be appropriately selected according to a purpose, but is preferably 90 mass% or more with respect to the total amount of the plastic composition.

A method of measuring the content of the plastic resin is not particularly limited and can be appropriately selected according to a purpose. For example, the content of the plastic resin may be measured by determining the weight ratio of the resin component from the ash determined in conformity with JIS K7250-1.

- Filler -

A filler (may be referred to as "foam nucleating agent" hereinafter) is included for the purpose of adjusting a foamed state (such as a size, an amount, and an arrangement of cells) of the plastic composition, reducing the cost, and improving the strength.

The filler is not particularly limited, can be appropriately selected according to a purpose, and examples thereof include inorganic fillers and organic fillers. These fillers may be used alone or in combination of two or more types.

Examples of inorganic fillers include, but are not limited to, talc, kaolin, calcium carbonate, silicate minerals, zinc carbonate, wollastonite, silica, alumina, magnesium oxide, calcium silicate, sodium aluminate, calcium aluminate, sodium aluminosilicate, magnesium silicate, a glass balloon, carbon black, zinc oxide, antimony trioxide, zeolite, hydrotalcite, metal fiber, metal whisker, ceramic whisker, potassium titanate, boron nitride, graphite, glass fiber, and carbon fiber. Among these inorganic fillers, silicate minerals are preferred from the viewpoint of performance and cost. Alternatively, silica or a filler whose surface is treated with silica is also preferable, because such fillers have affinity with compressible fluids, which will be described later.

Examples of organic fillers include, but are not limited to, naturally occurring polymers such as starch, cellulose, wood flour, soy pulp, rice husks, and wheat bran, sorbitol compounds, benzoic acid, phosphate ester metal salts, and rosin compounds. Among these organic fillers, cellulose is preferred from the viewpoint of low environmental impact.

- Foaming Agent -

The foaming agent is not particularly limited and can be appropriately selected according to a purpose. Examples of the foaming agent include, but are not limited to, hydrocarbons such as lower alkanes including propane, normal butane, isobutane, normal pentane, isopentane, and hexane, ethers such as dimethyl ether, halogenated hydrocarbons such as methyl chloride and ethyl chloride, and physical foaming agents such as compressible gases (may be referred to as "compressible fluids" hereinafter) including carbon dioxide and nitrogen. Among these foaming agents, compressible gases such as carbon dioxide and nitrogen are preferred, because these gases are odorless, can be handled safely, and have a low environmental impact.

If such a foaming agent is included, it is possible to obtain a plastic foamed sheet having a high foaming ratio.

- Other Components -

The other components are not particularly limited and may be appropriately selected according to a purpose. Examples of the other components include, but are not limited to, a cross-linking agent, a thermal stabilizer, an antioxidant, a plasticizer, and a lubricant.

The cross-linking agent is not particularly limited, can be appropriately selected according to a purpose. Preferred examples of the cross-linking agent include, but are not limited to, at least one type selected from an epoxy compound and an isocyanate compound, and the epoxy compound is more preferred.

A foamed sheet prepared by using an aliphatic polyester resin composition containing such a cross-linking agent can prevent coalescence and bursting of cells, and can improve the foaming ratio.

Next, a foamed plastic sheet (hereinafter referred to as a foamed sheet) that is formed by foaming a plastic composition when the plastic composition is extruded from the outlet port of the flow path 30 of the flow path forming device 5 will be described.

(Foamed Sheet)

The foaming ratio of the foamed sheet as a foamed plastic sheet is preferably 2 times to 50 times, more preferably 5 times to 40 times, and even more preferably 10 times to 30 times. When the foaming ratio is less than 2 times, the strength is sufficient, but the lightness of the foamed sheet is not good, which is undesirable. When the foaming ratio is more than 30 times, the lightness is excellent, but the strength is insufficient, which is undesirable.

A method of measuring the foaming ratio of the foamed sheet is not particularly limited and can be appropriately selected according to a purpose. For example, the foaming ratio may be measured by a buoyancy-type specific gravity measuring device. Further, the foaming ratio can be determined by measuring the bulk density and the true density of the foamed sheet and using the following formula.

$$\text{Foaming ratio} = \text{true density } [g/cm^3]/\text{bulk density } [g/cm^3]$$

It is preferable that the foamed sheet substantially does not contain any volatile components. If the foamed sheet substantially does not contain any volatile components, it is possible to improve the dimensional stability and also reduce the impact on the human body and the environment. Examples of volatile components include, but are not limited to, organic solvents and foaming agents such as butane. Further, the above-mentioned expression "substantially does not contain" means that volatile components are at or below the detection limit in an analysis described below.

A part of the foamed sheet is used as a sample, and 2 parts by mass of 2-propanol are added to 1 part by mass of the sample. The mixture is dispersed with ultrasonic waves for 30 minutes, and then, stored in a refrigerator (5°C) for one day or longer to obtain an extracted liquid of the volatile components. The extracted liquid of the volatile components is analyzed by gas chromatography (GC-14A, manufactured by Shimadzu Corporation) to quantify the volatile components in the foamed sheet. The measurement conditions are described below.

[Measurement Conditions]

- Device: Shimadzu GC-14A
- Column: CBP20-M 50-0.25
- Detector: FID
- Injection volume: 1 $\mu$L to 5 $\mu$L
- Carrier gas: He 2.5 kg/cm$^2$
- Hydrogen flow rate: 0.6 kg/cm$^2$
- Air flow rate: 0.5 kg/cm$^2$
- Chart speed: 5 mm/min
- Sensitivity: Range 101 x Atten 20
- Column temperature: 40°C
- Injection Temp: 150°C

[Measurement]

A part of the foamed sheet is dispersed in a solvent, and an extracted liquid of the volatile components is measured by gas chromatography under the above-described conditions to quantify the organic compounds. In the measurement, if organic compounds having a boiling point of -20°C or higher and lower than 150°C at 1 atm are not detected (are at or below the detection limit), the foamed sheet "substantially does not contain" volatile components.

To prevent organic compounds from being detected when subjecting the foamed sheet to the above-described measurement, as mentioned above, by using a foaming agent other than an organic compound such as carbon dioxide, it is possible to reduce the content of volatile components (organic compounds having a boiling point of -20°C or higher and lower than 150°C) to substantially 0 mass%. In the above-described measurement, the foamed sheet is selected so that organic compounds having a boiling point of -20°C or higher and lower than 150°C are not detected (are at or below the detection limit), and thus, the foamed sheet can be safely handled without generating odors and the like.

For example, as will be described later, carbon dioxide and the like, which is used as a compressible fluid in which the plastic resin is soaked in a kneading step, may not be removed after the kneading step and used as a foaming agent. If carbon dioxide is used as a compressible fluid in which the plastic composition is soaked in the kneading step and this compressible fluid is used as a foaming agent, it is possible to avoid the use of volatile components as a foaming agent. Therefore, it is easier to obtain a state where volatile components are substantially not contained in the foamed sheet.

Next, an extrusion molding device and an extrusion molding method for extruding the above-described plastic composition from the outlet port of the flow path of the flow path forming device 5 according to the present embodiment to mold the above-described foamed sheet (foamed plastic sheet) will be described.

(Extrusion Molding Device and Extrusion Molding Method)

The extrusion molding method includes a kneading step, a foaming step, and other steps. Note that the kneading step and the foaming step may be performed by one device (one extruder), or the kneading step and the foaming step may be performed by separate devices (extruders).

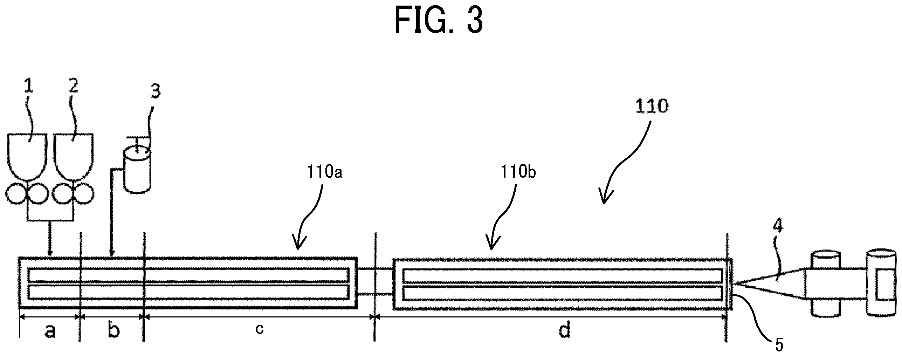

A device illustrated in FIG. 3 can be used as the extrusion molding device. The device will be described in detail later. An extrusion molding device 110 illustrated in FIG. 3 includes a first extruder 110a that performs a kneading step and a second extruder 110b that performs a foaming step. Note that the extrusion molding device 110 may further include devices that perform other steps. The first extruder 110a that performs the kneading step receives, from quantitative feeders 1 and 2, a pellet-shaped masterbatch (an intermediary resin composition) manufactured by a kneading device 100 illustrated in FIG. 2 described in detail later, and a material included in the above-mentioned plastic composition (a plastic resin, a filler, another component, and the like). Subsequently, the above-mentioned plastic composition is obtained by kneading in the first extruder 110a.

The above-mentioned flow path forming device 5 is attached to a downstream end portion of the second extruder 110b in a movement direction of the plastic composition. The plastic composition extruded by the second extruder 110b passes through the flow path 30 of the flow path forming device 5 illustrated in FIG. 1, the plastic composition is foamed at the outlet port of the flow path 30, and the above-described foamed sheet is extruded and molded.

Next, each step of the extrusion molding method and a device for performing each step will be described in detail by using an example in which an aliphatic polyester resin (polylactic acid) is used as the plastic resin.

First, the kneading step will be described.

<Kneading Step>

In the kneading step, an aliphatic polyester resin as the plastic resin and a cross-linking agent are kneaded at a temperature lower than the melting point of the aliphatic polyester resin in the presence of a compressible fluid to obtain an aliphatic polyester resin composition as the plastic composition.

The kneading is performed at a temperature lower than the melting point of the aliphatic polyester resin for the following two reasons. The first reason is that the aliphatic polyester resin has a property by which the melt viscosity decreases rapidly from the melting point onward, and thus, even if attempting to disperse the additives into the resin by kneading, the additives tend to aggregate and are difficult to disperse.

The second reason is that, when the aliphatic polyester resin and the cross-linking agent are kneaded at a high temperature, the cross-linking reaction is accelerated, and the aliphatic polyester resin is polymerized, which leads to an increase in the gel fraction of the resin composition.

To knead at a temperature below the melting point of such an aliphatic polyester resin, a compressible fluid is used to soak the aliphatic polyester resin. By soaking the aliphatic polyester resin in a compressible fluid, it is possible to knead the aliphatic polyester resin and the cross-linking agent in a high-viscosity state at a temperature lower than the melting point of the aliphatic polyester resin, and thus, it is possible to uniformly disperse unreacted additives such as the cross-linking agent in the aliphatic polyester resin.

Conventionally, when kneading an aliphatic polyester resin composition, particularly when kneading polylactic acid and additives, it is only possible to knead at a temperature equal to or higher than the melting point of polylactic acid and at a low viscosity equal to or lower than the melt viscosity of polylactic acid, and thus, issues with the dispersibility of additives and the like persist. However, in the present embodiment, as described above, the aliphatic polyester resin is soaked in a compressible fluid, and thus, the temperature is lower than the melting point of polylactic acid, and even if the polylactic acid has a high viscosity, the polylactic acid can be kneaded well, and the dispersibility of the additives can be improved.

Here, the compressible fluid used to soak the aliphatic polyester resin will be described.

- Compressible Fluid -

A compressible fluid is a fluid whose density changes in response to a change in pressure. Examples of the compressible fluid include, but are not limited to, a supercritical fluid that exists as a non-condensable high-density fluid in a temperature and pressure region exceeding the limit (critical point) where gas and liquid can coexist, and does not condense even when being compressed. Further examples of the compressible fluid include, but are not limited to, liquefied gases obtained by compressing substances that are in a gaseous state at ordinary temperature (25°C) and normal pressure (1 atm), and high-pressure gases (compressible gases) having a pressure of 1/2 or more of the critical pressure.

Examples of substances that can be used as the compressible fluid include, but are not limited to, carbon monoxide, carbon dioxide, dinitrogen monoxide, nitrogen, methane, ethane, propane, 2,3-dimethylbutane, ethylene, and dimethyl ether. Among these substances, carbon dioxide is preferable from the following four reasons. That is, the critical pressure of carbon dioxide is about 7.4 MPa, the critical temperature is about 3 1°C, and a supercritical state can be easily reached (a supercritical fluid can be created). Carbon dioxide is nonflammable and easy to handle. As mentioned above, carbon dioxide can be used as a foaming agent. By using carbon dioxide, it is easy to reach a state where the foamed sheet to be molded substantially does not contain volatile components. These compressible fluids may be used alone or in combination of two or more types.

The solubility of the compressible fluid changes depending on the combination of resin type and the compressible fluid, the temperature, and the pressure. Therefore, it is desired to appropriately adjust the supply amount of the compressible fluid.

For example, in the case of a combination of polylactic acid and carbon dioxide, the supply amount of carbon dioxide is preferably 2 mass% or more and 30 mass% or less. When the supply amount of carbon dioxide is 2 mass% or more, it is possible to prevent an issue in which the plasticizing effect becomes limiting. If the supply amount of carbon dioxide is 30 mass% or less, it is not possible to sufficiently disperse additives such as a cross-linking agent, due to an issue in which carbon dioxide and polylactic acid undergo phase separation.

- Kneading Device -

Next, a kneading device in which the above-described kneading step is performed will be described.

In the kneading device used for manufacturing the aliphatic polyester resin composition, a continuous process can be adopted, or a batch process can be adopted. However, it is preferable to select the reaction process appropriately, taking into account the device efficiency, the characteristics and the quality of the product, and the like.

Examples of the kneading device include, but are not limited to, a single-screw extruder, a twin-screw extruder, a kneader, a shaftless cage-type stirring tank, a VIVOLAC manufactured by Sumitomo Heavy Industries, Ltd., an N-SCR manufactured by Mitsubishi Heavy Industries, Ltd., and a tubular polymerization tank including an SMI, X-type static mixer having double-sided open circle blades or lattice blades manufactured by Hitachi, Ltd, and KENIX-type or SULZER-type blades, which can be used at a viscosity suitable for kneading. From the viewpoint of the color tone, a self-cleaning polymerization device such as a finisher, an N-SCR, and a twin-screw extruder can be used. Among these devices, a finisher and an N-SCR are preferred from the viewpoint of production efficiency, color tone of the resin, stability, and heat resistance.

FIG. 2 is a schematic diagram illustrating the kneading device 100.

The kneading device 100 illustrated in FIG. 2 uses a twin-screw extruder (manufactured by JSW, LTD.), and the screw diameter is 42 mm, LID is 48 where L is the screw length and D is the screw diameter.

The kneading device 100 has a raw material mixing/melting area a, a compressible fluid supply area b, a kneading area c, a compressible fluid removal area d, and a molding processing area e.

- Raw Material Mixing/Melting Area a-

In the raw material mixing/melting area, a pellet-shaped aliphatic polyester resin and a cross-linking agent are supplied from a first quantitative feeder 1 and a second quantitative feeder 2, as materials that form the above-described plastic composition. Note that, among the fillers and other components (thermal stabilizers, antioxidants, plasticizers, and lubricants) included in the above-described plastic composition, materials that do not react even at high temperatures may be additionally supplied.

Subsequently, in the raw material mixing/melting area a, the temperature of the supplied raw materials is raised. The heating temperature is set to a temperature equal to or higher than the melting temperature of the aliphatic polyester resin, and the supplied pellet-shaped aliphatic polyester resin is melted.

- Compressible Fluid Supply Area b -

In the compressible fluid supply area, a metering pump 3 serving as a compressible fluid supply portion supplies a compressible fluid to the molten resin to plasticize the molten resin.

- Kneading Area c -

In the kneading area, the raw materials supplied in the raw material mixing/melting area a are kneaded. In the kneading area, the temperature is set so that the viscosity is suitable for kneading the aliphatic polyester resin composition. The set temperature varies depending on the specifications of the reaction device, the type of the resin, the structure of the resin, the molecular weight, and the like. Therefore, the temperature is not particularly limited and can be changed as appropriate. For example, in the case of a commercially available polylactic acid having a weight average molecular weight (Mw) of about 200,000, kneading is normally performed at a temperature of 10°C to 20°C higher than the melting point of the polylactic acid. However, in the present embodiment, kneading can be performed at a temperature lower than the melting point of the polylactic acid.

Accordingly, in the kneading device 100 of the present embodiment, kneading is performed at a temperature lower than the melting point of the aliphatic polyester resin, and thus, the kneading can be performed at a relatively high viscosity as described above, and additives such as a cross-linking agent can be well dispersed in the resin. The temperature is not particularly limited, as long as the temperature is lower than the melting point of the resin. However, in the case of a commercially available polylactic acid, the temperature is preferably set 30°C to 80°C lower than the melting point of the polylactic acid, to suppress the progress of the cross-linking reaction of the cross-linking agent mixed in this area.

- Compressible Fluid Removal Area d -

In the compressible fluid removal area d, a pressure valve provided in the extruder is opened to discharge the compressible fluid to the outside.

- Molding Processing Area e -

In the molding processing area e, an intermediary resin composition (masterbatch) in which at least an aliphatic polyester resin and a cross-linking agent are mixed is molded and processed into any appropriate shape such as a pellet.

The pressure in each area within the extruder can be set as appropriate. In the present embodiment, the pressure from the compressible fluid supply area b to the compressible fluid removal area d is 7 MPa.

Next, the foaming step of the extrusion molding method will be described.

<Foaming Step>

The foaming step is a step of expanding the above-mentioned foaming agent to foam the aliphatic polyester resin composition. When a compressible fluid (a compressible gas such as carbon dioxide and nitrogen) is used as the foaming agent, the compressible fluid is expanded by releasing pressure to remove the compressible fluid and foam the aliphatic polyester resin composition. Specifically, the pressure is released by pushing the compressible fluid out from the flow path outlet port of the of the flow path forming device 5. Under atmospheric conditions, the compressible fluid is gradually replaced by air and removed from the foamed sheet. The temperature during the foaming step is preferably raised to a temperature close to the melting point of the resin.

When a compressible fluid used for soaking in the kneading step is used as a foaming agent in the foaming step, foaming is caused by an operation in which the solubility of the compressible fluid dissolved in the aliphatic polyester composition is reduced by reducing the pressure or increasing the temperature, which results in supersaturation. It is assumed that, by lowering the solubility of the compressible fluid, foamed nuclei are formed mainly at an interface with the foam nucleating agent (filler), and the compressible fluid dissolved in the aliphatic polyester composition diffuses, so that the foamed core grows and forms cells and a foamed body is obtained.

The foaming process starts from the foam nucleating agent (filler), and thus, a foamed sheet having uniform and fine cells can be manufactured when the foam nucleating agent (filler) is uniformly dispersed in the resin. Even when no foam nucleating agent (filler) is used, a foamed sheet having uniform and fine cells can be manufactured, because a small amount of crystals generated in the kneading area substantially acts as a foam nucleating agent. However, if the crystallization progresses excessively, the fluidity of the composition may decrease and foaming may not easily occur, and thus, it is preferable to add a foam nucleating agent (filler).

Next, other steps of the extrusion molding method will be described.

<Other Steps>

The other steps are not particularly limited and can be appropriately selected according to a purpose, as long as the other steps are steps performed in the production of ordinary plastic foamed sheets, such as a molding step for forming a sheet.

Examples of the molding step include, but are not limited to, vacuum molding, pressure molding, and press molding. In the present embodiment, a cylindrical masterbatch is molded, and this masterbatch is formed into a sheet shape by the molding step to obtain a foamed sheet.

Next, an extrusion molding device for molding a foamed sheet will be described.

- Extrusion Molding Device -

FIG. 3 is a diagram illustrating the extrusion molding device 110.

As illustrated in FIG. 3, the extrusion molding device 110 includes the first extruder 110a that performs the kneading step and the second extruder 110b that performs the foaming step. The flow path forming device 5 illustrated in FIG. 1 is attached to a downstream end portion of the second extruder 110b in the movement direction of the plastic composition.

The first extruder 110a and the second extruder 110b are twin-screw extruders (manufactured by JSW, LTD.), similar to the kneading device 100 in FIG. 2.

The extrusion molding device 110 has a raw material mixing/melting area a, a compressible fluid supply area b, a kneading area c, and a heating area d.

- Raw Material Mixing/Melting Area a -

In the raw material mixing/melting area, a process similar to the one in the raw material mixing/melting area of the kneading device illustrated in FIG. 2 is performed. That is, raw materials are supplied from the first quantitative feeder 1 and the second quantitative feeder 2 and mixed, and the supplied raw materials are heated to melt the resin.

The raw materials supplied from the first quantitative feeder 1 and the second quantitative feeder 2 include a masterbatch (an intermediary resin composition mixed with at least an aliphatic polyester resin and a cross-linking agent) molded in the kneading device 100 illustrated in FIG. 2, a filler, and other components such as the above-mentioned thermal stabilizer, antioxidant, plasticizer, and lubricant.

Further, when the concentration of the cross-linking agent contained in the masterbatch molded by the kneading device 100 illustrated in FIG. 2 is high, resin pellets are additionally supplied to adjust the concentration of the cross-linking agent to an appropriate value. The type of the plastic resin that is additionally supplied is not particularly limited, but the additionally supplied plastic resin is preferably the same aliphatic polyester resin as the plastic resin in the masterbatch. It is preferable to use the same resin as the plastic resin in the masterbatch, because in this case, the resins are mixed uniformly in the kneading step and an unreacted cross-linking agent contained in the resin is also uniformly dispersed. The masterbatch already contains a cross-linking agent, however, a cross-linking agent may be further additionally supplied.

As described above, the filler as a foam nucleating agent is added in the extrusion molding device 110. However, the filler may also be added when the masterbatch (the intermediary resin composition) is molded in the kneading device 100 illustrated in FIG. 2. Further, the filler may be added in both the kneading step when the masterbatch is molded and the kneading step when the foamed sheet is molded.

- Compressible Fluid Supply Area b -

In the compressible fluid supply area, similarly to the compressible fluid supply area of the kneading device 100 illustrated in FIG. 2, the metering pump 3 serving as a compressible fluid supply portion supplies a compressible fluid to the molten resin to plasticize the molten resin.

As the compressible fluid used for soaking when the foamed sheet is molded, it is possible to use the compressible fluid used for soaking when the masterbatch (the intermediary resin composition) is molded in the kneading device 100. As the compressible fluid used for soaking when the foamed sheet is molded, carbon dioxide is preferable from the four reasons mentioned above. The compressible fluid used for soaking when the foamed sheet is molded may be used as one type alone, or two or more types may be used in combination. As described above, by using the compressible fluid for soaking, it is possible to knead well, even when the viscosity is high. Thus, the filler (the foam nucleating agent) can be uniformly dispersed in the plastic resin, and a foamed sheet having uniform and fine cells can be manufactured.

Further, in the present embodiment, the compressible fluid supplied in the compressible fluid supply area b is used as a foaming agent. If the compressible fluid supplied in the compressible fluid supply area b is used as a foaming agent, kneading and foaming can be performed in a series of processes, which is more preferable as a manufacturing aspect from the viewpoint of reducing a burden to the environment. As for the supply amount of the compressible fluid, as described above, when the aliphatic polyester resin composition is 100 parts by mass, the supply amount of carbon dioxide is preferably 2 mass% or more and 30 mass% or less.

Note that, to facilitate kneading even when the viscosity is high, a foaming agent may be used separately from the compressible fluid used for soaking. As the foaming agent, the foaming agents mentioned in the description of the plastic composition above can be used.

- Kneading Area c -

In the kneading area c, similarly to the kneading area of the kneading device illustrated in FIG. 2, the raw materials supplied in the raw material mixing/melting area a are kneaded at a temperature lower than the melting temperature of the aliphatic polyester resin.

- Heating Area d -

The aliphatic polyester resin kneaded in the kneading area c of the first extruder 110a is supplied to the heating area d of the second extruder 110b. In the heating area d, the aliphatic polyester resin supplied from the first extruder 110a is further kneaded. In the heating area d, the temperature is preferably set so that the temperature of the plastic composition when extruded from the flow path outlet port of the flow path forming device 5 is lower than the melting point of the plastic composition.

If the temperature of the plastic composition when extruded from the flow path outlet port of the flow path forming device 5 is set to a lower temperature than the melting point of the plastic composition, the plastic composition can be thickened, and thus, it is possible to obtain a foamed plastic having a high foaming ratio.

The aliphatic polyester resin that is further kneaded in the heating area d is extruded into the flow path 30 of the flow path forming device 5 attached to a downstream end portion of the second extruder 110b in the movement direction of the plastic composition. Subsequently, the aliphatic polyester resin passes through the flow path 30 of the flow path forming device illustrated in FIG. 1 and the pressure is released at the outlet port of the flow path 30. Thus, the compressible fluid serving as the foaming agent is expanded and removed, so that an aliphatic polyester resin composition is extruded and foamed. A foamed sheet 4 obtained by extruding and foaming the aliphatic polyester resin composition is wound up on a mandrel.

In the present embodiment, the flow path forming device 5 described with reference to FIG. 1 is used as the flow path forming device 5. Specifically, the flow path forming device 5 is used in which the average value of the maximum droplet weight G in a range of 3 mm from the outlet port of the flow path of the first flow path forming surface 40 and the second flow path forming surface 50 is 8 $\mu$g or more and 25 $\mu$g or less. Thus, the flow resistance of the aliphatic polyester resin composition immediately before foaming with respect to the flow path forming surface can be kept within an appropriate range. Accordingly, as described above, the flow stability of the aliphatic polyester resin composition immediately before foaming is maintained, and the foamed sheet 4 without uneven thickness can be obtained. Further, friction between the flow path forming surface and the aliphatic polyester resin composition is prevented, and a foamed sheet that has good appearance and reduced surface roughness can be obtained.

In the present embodiment, an intermediary resin composition (masterbatch) is molded by using the kneading device 100 illustrated in FIG. 2. In the first extruder 110a of the extrusion molding device 110, the intermediary resin composition and an additive such as a filler are kneaded to produce an aliphatic polyester resin composition. However, the configuration is not limited thereto. The aliphatic polyester resin composition may be produced in the kneading step of the extrusion molding device 110, without molding the intermediary resin composition (masterbatch).

<Manufactured Product>

The foamed sheet obtained according to the present embodiment may be directly used, or may be used as a manufactured product. The foamed sheet of the present embodiment is very light and heat resistant, and thus can be suitably used as a food container and tableware. Although the foamed sheet is suitable as a heat-resistant food container, the foamed sheet is not limited to such an application. Further, the foamed sheet may be directly printed with characters or the like and used.

Moreover, a manufactured product using the obtained foamed sheet is not particularly limited, and can be appropriately changed. The manufactured product includes a foamed sheet and if desired, includes other components. The other components are not particularly limited and can be appropriately selected according to a purpose, as long as the other components are used in general resin products.

The obtained foamed sheet may be processed to obtain the manufactured product of the present embodiment. The processing used to process the foamed sheet is not particularly limited. For example, the foamed sheet may be subjected to a process in which the foamed sheet is processed by using a mold to obtain a product. A method of processing the sheet by using a mold is not particularly limited, and examples thereof include conventionally known methods for thermoplastic resins, such as vacuum molding, pressure molding, vacuum pressure molding, and press molding.

Examples of manufactured products (also referred to as consumer goods) include, but are not limited to, packaging containers, trays, tableware, and cutlery. This concept of a manufactured product includes not only a single manufactured product, but also parts made of the manufactured product, such as a tray handle, and products including the manufactured product, such as a tray to which a handle is attached. Other examples of manufactured products include, but are not limited to, bags, stationery, and daily commodities.

Further, the amount of cross-linking agent in the obtained foamed sheet varies depending on the molecular weight of the resin being used and the molecular weight distribution of the resin. In particular, when a biodegradable resin is used as the aliphatic polyester resin, the biodegradable resin is preferably adjusted to 3 mass% or less in order not to impair the biodegradability.

Further, the amount of the foam nucleating agent (filler) in the foamed sheet is preferably adjusted to 10 parts by mass or less. If the amount of the foam nucleating agent exceeds 10 parts by mass, the physical properties of the foamed sheet may be hard and brittle. In particular, when a biodegradable resin is used as the aliphatic polyester resin, the content of a non-biodegradable foam nucleating agent is preferably lower, and is more preferably adjusted to 1 part by mass or less.

When using a biodegradable resin as the aliphatic polyester resin, from the viewpoint of biodegradability and recyclability (easier recycling), it is preferable that the content of the biodegradable resin is 90 mass% or more with respect to the total amount of organic substances in the foamed sheet. More preferably, the content of the biodegradable resin is 98 mass% or more. When the content of the biodegradable resin is 90 mass% or more, even if the polylactic acid biodegrades, it is possible to prevent other components that do not biodegrade from remaining. If the content of the biodegradable resin is less than 90 mass%, it is not possible to obtain good biodegradability.

Examples of the organic substances in the foamed sheet mainly include biodegradable resins such as polylactic acid. In addition to polylactic acid, other examples of the organic substances include, but are not limited to, organic core materials and cross-linking agents. When an inorganic core material is used as the foam nucleating agent, the inorganic core material does not correspond to the organic substances.

- Method of Measuring Content Ratio of Polylactic Acid-

The content ratio of polylactic acid in the foamed sheet can be calculated from the ratio of the material being added (the raw material supplied in the raw material mixing/melting area a of the extrusion molding device). If the material ratio is unknown, the components can be identified by performing the following GCMS analysis and comparing with a known polylactic acid as a standard sample, for example. If desired, the content ratio can be calculated by using the area ratio of the spectrum obtained by an NMR measurement and another analysis method in combination.

[Measurement by GCMS Analysis]

- GCMS: QP2010 manufactured by Shimadzu Corporation, auxiliary equipment Py3030D by Frontier Laboratories Ltd.
- Separation column: ULTRA ALLOY UA5-30M-0.25F by Frontier Laboratories Ltd.
- Heating temperature of sample: 300°C
- Column oven temperature: 50°C (held for 1 minute) -> temperature increase of 15°C/min -> 320°C (6 minutes)
- Ionization method: Electron ionization (E.I) method
- Detected mass range: 25 to 700 (m/z)

Specifically, the content ratio of the polylactic acid in the foamed sheet can be determined by, for example, performing an analysis using gas chromatography-mass spectrometry (GC-MS) and determining a calibration curve in advance by using a known polylactic acid as a standard sample, to determine the ratio of the polylactic acid in the foamed sheet. Further, at this time, if an organic nucleating agent is identified by searching in a mass spectrum library, it is also possible to prepare a calibration curve to quantify the added amount. If desired, the content can be calculated by using the area ratio of the spectrum obtained by an NMR measurement and another analysis method in combination.

Next, a verification experiment conducted by the applicant will be described.

[Verification Experiment]

First, the flow path forming devices of Examples 1 to 5 and Comparative Examples 1 to 3 used in the verification experiment will be described.

[Example 1]

The first flow path forming member 10 and the second flow path forming member 20 made of the material S45C (manufactured by Misumi Corporation) were processed by sandblasting (using an alumina abrasive medium for blasting manufactured by Monotaro Co., Ltd., processing angle of about 45 degrees) to form the shape of the flow path illustrated in FIG. 1. Next, about 100 $\mu$m of a silicone-based release coating was applied to the flow path forming surfaces 40 and 50 processed by sandblasting, and the flow path forming surfaces 40 and 50 were baked.

Subsequently, after performing an aging treatment at 220°C, the flow path forming surfaces 40 and 50 were wiped with toluene. Finally, the flow path forming surfaces 40 and 50 were processed with a #2000 paper to manufacture the first flow path forming surface 40 and the second flow path forming surface 50.

Water was deposited within a range of 3 mm from the outlet port of the flow path 30 in the manufactured first flow path forming surface 40 and second flow path forming surface 50, and the above-mentioned method of measuring the maximum droplet weight G at which the droplet does not slide down from the first flow path forming surface 40 and the second flow path forming surface 50 was used to measure the maximum droplet weight G. Both measured values were 10 $\mu$g, and the average value of the maximum droplet weight was 10 $\mu$g.

Further, the contact angle was measured by the contact angle measurement method described above. The contact angle measurement method described above is a measurement method in which the measurement error is not zero. Therefore, the contact angle was measured three times while changing the position within a range of 3 mm from the outlet port of the flow path 30 in the first flow path forming surface 40 and the second flow path forming surface 50. The variation was checked, and if the variation was outside a specified range, the number of measurements was further increased. The average value of these measured values was calculated to obtain the contact angle. The obtained contact angle was 88.2°.

Further, the arithmetic mean roughness Ra and the roughness curve element average length Rsm of the first flow path forming surface 40 and the second flow path forming surface 50 at a location within a range of 3 mm from the outlet port of the flow path 30 were measured by using the above-described method of measuring each of the surface roughness parameters Rsm, Ra, and Rk. The above-described method of measuring each of the surface roughness parameters Rsm, Ra, and Rk is also a measurement method in which the measurement error is not zero. Therefore, similarly to the measurement of the contact angle, the measurement was performed three times while changing the position to confirm the variation, and if the variation was large, the number of measurements was further increased. The average value of these measured values was calculated to obtain the arithmetic mean roughness Ra and the roughness curve element average length Rsm. The arithmetic mean roughness Ra was 1.29 $\mu$m, and the roughness curve element average length Rsm was 91.6 $\mu$m.

Note that, according to the shape of the flow path, if the range of 3 mm from the outlet port of the flow path 30 is not suitable for measuring the maximum droplet weight G, the contact angle, the surface roughness Rsm, and the surface roughness Ra, the same process may be performed on the flow path forming surface in the vicinity of the outlet port of the flow path (in a range of 3 mm from the outlet port of the flow path 30), and the measurement may be performed at a location where the surface state is likely to be equivalent to that near the outlet port of the flow path. Alternatively, a test piece or the like that is subjected to the same treatment as the surface in the vicinity of the outlet port of the flow path (in a range of 3 mm from the outlet port of the flow path 30) may be prepared and measured instead. In addition, when it is possible to measure the surface in the vicinity of the outlet port of the flow path for one flow path forming surface among the first flow path forming surface 40 and the second flow path forming surface 50, the first flow path forming surface 40 and the second flow path forming surface 50 may be processed in the same lot and the measured value of one of the flow path forming surfaces may be used instead.

[Example 2]

Example 2 is similar to Example 1, except that the coating material of the first flow path forming surface 40 and the second flow path forming surface 50 was changed from a silicone-based release coating to a fluorine-based release coating. The maximum droplet weight G was measured for each of the flow path forming surfaces 40 and 50 similarly to Example 1, and the average value of the maximum droplet weight G was 10 $\mu$g. Further, the average value of the contact angle was 83.3°, the average value of the arithmetic mean roughness Ra was 1.26 $\mu$m, and the average value of the roughness curve element average length Rsm was 105 $\mu$m.

[Example 3]

Example 3 is similar to Example 1, except that the material of each of the flow path forming members 10 and 20 was changed from S45C to a hard chrome plating. The maximum droplet weight G was measured for each of the flow path forming surfaces 40 and 50 similarly to Example 1, and the average value of the maximum droplet weight G was 15 $\mu$g. Further, the average value of the contact angle was 60.3°, the average value of the arithmetic mean roughness Ra was 0.21 $\mu$m, and the average value of the roughness curve element average length Rsm was 67.7 $\mu$m.

[Example 4]

Example 4 is similar to Example 2, except that the wiping operation after aging was performed by using a solvent equivalent to hexane. The maximum droplet weight G was measured for each of the flow path forming surfaces 40 and 50 similarly to Example 1, and the average value of the maximum droplet weight G was 8 $\mu$g. Further, the average value of the contact angle was 106.6°, the average value of the arithmetic mean roughness Ra was 1.35 $\mu$m, and the average value of the roughness curve element average length Rsm was 122.8 $\mu$m.

[Example 5]

Example 5 is similar to Example 1, except that the sample was processed by using a #2000 paper for a longer time than in Example 1. The maximum droplet weight G was measured for each of the flow path forming surfaces 40 and 50 similarly to Example 1, and the average value of the maximum droplet weight G was 25 $\mu$g. Further, the average value of the contact angle was 57.6°, the average value of the arithmetic mean roughness Ra was 1.02 $\mu$m, and the average value of the roughness curve element average length Rsm was 138.0 $\mu$m.

[Comparative Example 1]

Comparative Example 1 is similar to Example 2, except that, after the coating and firing, no treatment (aging treatment, treatment with paper) was performed and the product was left in a new state. The maximum droplet weight G was measured for each of the flow path forming surfaces 40 and 50 similarly to Example 1, and the average value of the maximum droplet weight G was 5 $\mu$g. Further, the average value of the contact angle was 102°, the average value of the arithmetic mean roughness Ra was 1.24 $\mu$m, and the average value of the roughness curve element average length Rsm was 99.4 $\mu$m.

[Comparative Example 2]

Comparative Example 2 is similar to Example 1, except that the sample was processed by using a #1000 paper, instead of a #2000 paper. The maximum droplet weight G was measured for each of the flow path forming surfaces 40 and 50 similarly to Example 1, and the average value of the maximum droplet weight G was 30 $\mu$g. Further, the average value of the contact angle was 91.2°, the average value of the arithmetic mean roughness Ra was 1.57 $\mu$m, and the average value of the roughness curve element average length Rsm was 75.2 $\mu$m.

[Comparative Example 3]

In Comparative Example 3, the first flow path forming surface 40 and the second flow path forming surface 50 were manufactured by sandblasting only portions of the first flow path forming member 10 and the second flow path forming member 20 made of the material S45C that form the flow path forming surfaces. The maximum droplet weight G was measured for each of the flow path forming surfaces 40 and 50 similarly to Example 1, and the average value of the maximum droplet weight G was 60 $\mu$g. Further, the average value of the contact angle was 121°, the average value of the arithmetic mean roughness Ra was 2.07 $\mu$m, and the average value of the roughness curve element average length Rsm was 52.4 μm.

In the verification experiment, the above-described flow path forming devices of Examples 1 to 5 and Comparative Examples 1 to 3 were attached to the extrusion molding device 110 illustrated in FIG. 3 to form a foamed sheet, and the bulk density, the deviation, and the appearance were measured and evaluated.

The kneading conditions in the verification experiment are described below.

- Plastic resin: Polylactic acid A (4032D, manufactured by NatureWorks LLC, melting point 168°C)
- Filler: Magnesite (MS-S, manufactured by Konoshima Chemical Co., Ltd., number average particle diameter 1.2 μm)
- Total flow rate of polylactic acid and filler: 10 kg/hr (polylactic acid: 9 kg/hr, filler: 1 kg/hr)
- Compressible fluid: carbon dioxide (flow rate: 0.9 kg/h (corresponding to 10 mass% with respect to polylactic acid))

The temperatures in each area were as follows. Raw material mixing/melting area a and compressible fluid supply area b: 190°C, kneading area c: 130°C, compressible fluid removal area d: 190°C, and molding processing area e: 190°C. The pressure in each zone was 10.0 MPa from the compressible fluid supply area b to the kneading area c, and the pressure in the compressible fluid removal area d was 0.5 MPa to obtain an intermediary resin composition. The foamed sheet was formed at a total flow rate of 30 kg/hr, of which 1.5 kg/hr was the flow rate of carbon dioxide and 20 kg/hr was the flow rate of polylactic acid A. The areas a, b, and c were kept at the same temperature as used for kneading. The temperature of area d was 150°C. The pressure in the flow path 30 of the flow path forming device 5 was set to 5 MPa. Thus, a foamed sheet having a thickness of 1000 μm was molded. The bulk density, the deviation, and the appearance of the obtained foamed sheet were evaluated.

<Bulk Density>

The bulk density was measured as described below. Specifically, the foamed sheet was allowed to stand for 24 hours or more in an environment adjusted to a temperature of 23°C and a relative humidity of 50%, and a test piece of 50 mm x 50 mm was cut out from the foamed sheet. The bulk density of the cut test piece was determined by using an automatic hydrometer (DSG-1, manufactured by Toyo Seiki Seisaku-sho, Ltd.) using a submerged weighing method. The bulk density was calculated by accurately weighing the weight (g) of the foamed sheet in the atmosphere, and then, accurately weighing the weight (g) of the foamed sheet in water, and using the formula below.

Bulk density [g/cm$^3$] = sample weight in atmosphere [g] / {(sample weight in atmosphere [g] - weight in liquid [g]) $\times$ density of liquid [g/cm$^3$]}

<Appearance>

The appearance of the foamed sheet was evaluated as described below.

The front surface and the back surface of the obtained foamed sheet were analyzed by using image processing, and an index was used to quantify an appearance defect. The appearance was visually evaluated as having a defect, when the size and the width of foreign matter in a solid state present on the sheet surface were large, and the difference in brightness from the background was large. Therefore, people visually evaluated about 100 samples in advance and used human senses to rank the samples in terms of defects in the appearance. An image processing algorithm was fitted to achieve the highest degree of agreement and quantify the appearance defect. A conventional evaluation by visual ranking may be used. However, the present index was used in the evaluation from the viewpoint of efficiency and reproducibility.

[Evaluation of Appearance]

The appearance defect was analyzed and quantified by the image processing described above. The appearance was evaluated based on whether the appearance was less than 16, which is a range in which the sample can be used as a product.

<Deviation>

The deviation was evaluated as described below.

The foamed sheet was allowed to stand for 24 hours or more in an environment adjusted to a temperature of 23°C and a relative humidity of 50%, and a test piece of 50 mm x 50 mm was cut out from the foamed sheet. The weight (g) of the foamed sheet in the atmosphere was accurately weighed for the cut test piece, and the obtained value was divided by the sheet area of 50 mm x 50 mm to determine the sheet weight per unit area. The standard deviation of 12 pieces of data obtained by performing the above-described process at 12 locations in a TD direction (a width direction of the foamed sheet, a direction perpendicular to the extrusion direction) was divided by the average value of the 12 points, and the obtained value was used as the deviation.

The deviation was evaluated based on whether the deviation was less than 0.16, which is a range in which the sample can be used as a product. The deviation of the foamed sheet is more preferably less than 0.10, and even more preferably less than 0.08.

As long as the parameter reflects the deviation state of the flow in the TD direction (a circumferential direction of the flow path 30), the sheet weight per unit area is not particularly limited, and the evaluation may be based on the foaming ratio, the thickness, and the like. Further, the spatial resolution does not need to be 12 points. A smaller number of measurements can be used, as long as the resolution is set in advance, so that the phenomenon can be correctly identified and the value of the product can be estimated.

Samples having an appearance defect of less than 16 and a deviation of less than 0.16 were rated as "good".

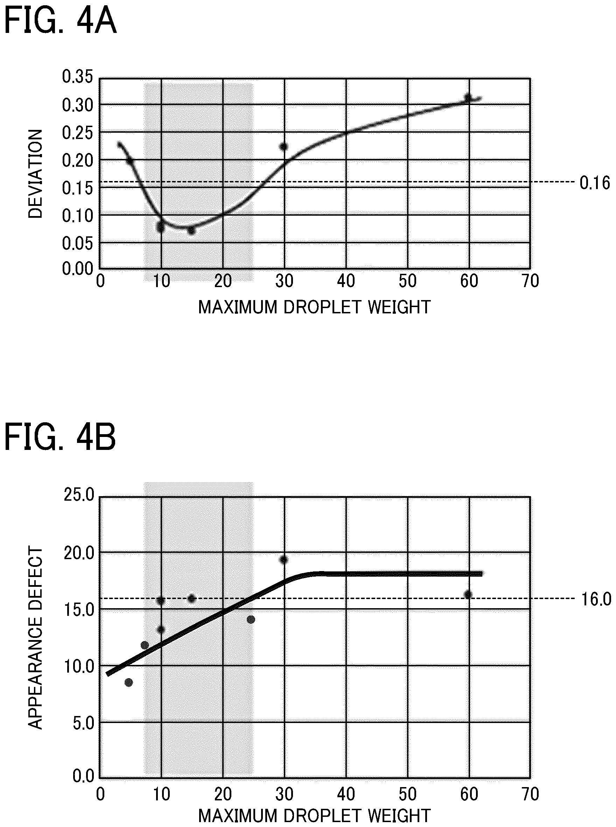

Table 1 below illustrates the results of the verification experiment, and FIGS. 4A and 4B are a graph of the results of the verification experiment.

Table 1

|  | Contact angle (°) | Ra (µm) | Rsm (µm) | Droplet weight (µg) | Bulk density (g/cm³) | Deviation (-) | Appearance (-) | Evaluation |
|---|---|---|---|---|---|---|---|---|
| Example 1 | 88.2 | 1.29 | 91.6 | 10 | 0.093 | 0.071 | 15.8 | Good |
| Example 2 | 83.3 | 1.26 | 105 | 10 | 0.103 | 0.078 | 13.2 | Good |
| Example 3 | 60.3 | 0.21 | 67.7 | 15 | 0.125 | 0.068 | 15.9 | Good |
| Example 4 | 106.0 | 1.35 | 122.8 | 8 | 0.076 | 0.128 | 12.9 | Good |
| Example 5 | 57.6 | 1.02 | 138.0 | 25 | 0.094 | 0.142 | 14.2 | Good |
| Comparative Example 1 | 102 | 1.24 | 99.4 | 5 | 0.125 | 0.196 | 8.3 | Fail |
| Comparative Example 2 | 91.2 | 1.57 | 75.2 | 30 | 0.120 | 0.220 | 19.4 | Fail |
| Comparative Example 3 | 121 | 2.07 | 52.4 | 60 | 0.123 | 0.313 | 16.6 | Fail |

As indicated in Table 1, in Comparative Example 1 in which the average value of the maximum droplet weight G was 5 µg, the appearance defect was 8.3, and very good results were obtained in the evaluation of the appearance. However, the deviation was 0.16 or more, and the evaluation of the deviation failed to satisfy the standard.

The average value of the maximum droplet weight G was 5 µg, and thus, the state in Comparative Example 1 is considered to be a state in which the plastic composition was sliding too much on the flow path forming surface. Thus, the back pressure inside the flow path decreases, which makes it impossible to extrude the plastic composition well, causes the plastic composition to wrap around in the flow path in a direction perpendicular to the extrusion direction, and is considered to lead to an unstable flow rate of the plastic composition to be extruded from the outlet port of the flow path. Therefore, it is considered that, even at a high contact angle of 102°, it is not possible to stably discharge the plastic composition from the outlet port of the flow path. As a result, it is considered that it is not possible to suppress the uneven thickness of the molded foamed sheet and the deviation exceeded 0.16.

Comparative Examples 2 and 3 in which the average value of the maximum droplet weight G was 30 µg or more failed to satisfy the standards of both the appearance and the thickness deviation. This is because the average value of the maximum droplet weight G was 30 µg or more, and thus, it is considered that the plastic composition does not easily slide on the flow path forming surface, and the flow resistance of the plastic in the flow path with respect to the flow path forming surface is large. As a result, it was not possible to smoothly discharge the plastic composition from the outlet port of the flow path, and it is considered that the surface rubbed against the flow path forming surface, which results in strong surface roughness, and a numerical value of the appearance defect of 16 or higher, so that the appearance did not satisfy the standard.

Further, it is considered that the plastic composition does not easily slide on the flow path forming surface, so that the flow resistance in the flow path is unbalanced, and the flow rate of the plastic composition extruded from the outlet port of the flow path is unstable. As a result, the deviation was 0.16 or more, and it is considered that also the deviation failed to satisfy the standard.

On the other hand, Examples 1 to 5, in which the average value of the maximum droplet weight G was from 8 $\mu$g to 25 $\mu$g, satisfied the standards for both the deviation and the appearance, and were evaluated as "good." Further, from the graphs illustrated in FIGS. 4A and 4B, it was confirmed that, if the average value of the maximum droplet weight G was from 8 $\mu$g to 25 $\mu$g, both the deviation and the appearance satisfied the standard. This is because, in Examples 1 to 5, it is considered that it was possible maintain the sliding properties of the flow path forming surface with respect to the plastic composition within an appropriate range, prevent the back pressure within the flow path from decreasing, and maintain a constant flow resistance within the flow path. Accordingly, the flow rate of the plastic composition extruded from the outlet port of the flow path was stabilized, and the occurrence of uneven thickness was suppressed, and thus, it is considered that the deviation satisfied the standard (less than 0.16).

Further, if the sliding properties of the flow path forming surface with respect to the plastic composition are within an appropriate range, the plastic composition is prevented from rubbing against the flow path forming surface at the outlet port of the flow path, and is discharged smoothly, so that it is possible to prevent the surface of the foamed sheet from becoming rough. Thus, it is considered that the numerical value of the appearance defect satisfies the standard (less than 16).

In each of Examples 1 to 5, the arithmetic mean roughness Ra of the flow path forming surface was less than 1.5, the roughness curve element average length Rsm was 60 $\mu$m or more, and it is considered that the surface roughness of the flow path forming surface was suppressed. As a result, it is considered that it was possible to suppress the roughness of the surface of the foamed sheet originating when the roughness of the surface of the flow path forming surface is transferred to the surface of the foamed sheet, and the numerical value of the appearance defect satisfied the standard (less than 16).

Further, it was found that, in Examples 1 to 3 in which the average value of the maximum droplet weight G was from 10 $\mu$g to 15 $\mu$g, it was possible to suppress the deviation to 0.08 or less, and to suppress an uneven thickness of the molded product well.

Preferred embodiments of the present embodiment have been described above. However, the present embodiment is not limited to these specific embodiments, and unless specifically limited in the above description, the present embodiment can be variously changed and modified within the scope of the spirit of the present embodiment described in the claims.

The description above is only an example, and each of the following aspects has a unique effect.

(Aspect 1)

In a flow path forming device 5 including a first flow path forming member 10 having a first flow path forming surface 40 and a second flow path forming member 20 and in which the first flow path forming member 10 and the second flow path forming member 20 having a second flow path forming surface 50, the first flow path forming surface 40 of the first flow path forming member 10 and the second flow path forming surface 50 of the second flow path forming member 20 form a flow path 30 through which a plastic composition flows, and when a water droplet is deposited on a droplet deposition surface of each of the first flow path forming surface 40 and the second flow path forming surface 50, where the droplet deposition surface is in a range an outlet port of the flow path 30 to 3 mm upstream in a flow direction of at least the plastic composition, and the droplet deposition surface on which the water droplet is deposited is tilted from a state parallel to a horizontal direction to a state parallel to a vertical direction, to measure a maximum droplet weight G at which the water droplet does not slide down from the droplet deposition surface, an average value of the maximum droplet weight on the first flow path forming surface (40) and the maximum droplet weight on the second flow path forming surface (50) is 8 $\mu$g or more and 25 $\mu$g or less.

In Japanese Patent No. 2896832, a contact angle of the flow path forming surface with a plastic composition such as a molten resin is regulated to prevent the occurrence of uneven thickness of a molded product and to improve the appearance of the molded product. However, even if the contact angle is adjusted to an appropriate range, it may not be possible to maintain the pressure in the vicinity of an outlet port of the flow path well, so that the uneven thickness of the molded product may be worsen or the surface of the molded product may become rough and deteriorate the appearance. The reason therefore is considered that the above-mentioned contact angle is insufficient as an index value indicating the sliding properties of the flow path forming surface.

Therefore, in Aspect 1, the maximum droplet weight G is used as the index value indicating the sliding properties of the flow path forming surface. The maximum droplet weight G is a maximum droplet weight at which a water droplet does not slide down from a droplet deposition surface, when a water droplet is deposited on the droplet deposition surface of the flow path forming surface and the droplet deposition surface is tilted from a state parallel to a horizontal direction to a state parallel to a vertical direction. If the flow path forming surface has good sliding properties, water droplets slide down easily, and the maximum droplet weight G is reduced. On the other hand, if the flow path forming surface has poor sliding properties, water droplets do not easily slide down, and the maximum droplet weight G increases. Therefore, by specifying the maximum droplet weight G mentioned above, the sliding properties of the flow path forming surface with respect to the plastic composition can be set within a more appropriate range than in a case where the contact angle is used to specify the sliding properties.

As mentioned in the above-described verification experiment, when the average value of the maximum droplet weight G mentioned above is 8 $\mu$g or more and 25 $\mu$g or less, the occurrence of uneven thickness of a molded product is prevented, and the appearance of the molded product is improved.

(Aspect 2)

In Aspect 1, the average value of the maximum droplet weight G on the first flow path forming surface 40 and the maximum droplet weight G on the second flow path forming surface 50 is 10 $\mu$g or more and 15 $\mu$g or less.

According to Aspect 2, as indicated in the verification experiment, the deviation can be reduced to a value of 0.08 or less, and the uneven thickness of the molded product can be prevented in a good manner.

(Aspect 3)

In Aspect 1 or 2, at least one of the first flow path forming surface 40 and the second flow path forming surface 50 has a contact angle with water of 55° or more and less than 110°.

According to Aspect 3, the flow path forming surface can be formed by a relatively inexpensive process.

(Aspect 4)

In any one of Aspects 1 to 3, at least one of the first flow path forming member surface 40 and the second flow path forming surface 50 has an arithmetic mean roughness Ra of less than 1.5 and a roughness curve element average length Rsm of 60 $\mu$m or more.

According to Aspect 4, as described in the embodiment, the surface of the molded product, such as a foamed sheet, is prevented from being roughened when the roughness of the flow path forming surface is transferred thereto, and deterioration of the appearance of the molded product is prevented.

(Aspect 5)

In an extrusion device including the flow path forming device 5 of any one of Aspects 1 to 4, the flow path forming device 5 extrudes a plastic composition from the outlet port of the flow path of the flow path forming device 5.

According to Aspect 5, extrusion molding is performed which can produce a molded product having good appearance and in which uneven thickness is prevented.

(Aspect 6)

In Aspect 5, the extrusion device extrudes at least one type of a nonflammable gas and the plastic composition from the outlet port of the flow path of the flow path forming device at a temperature lower than a melting point of the plastic composition to manufacture a foamed plastic.

According to Aspect 6, as described in the embodiment, a foam nucleating agent such as filler can be uniformly dispersed in a plastic resin, and a foamed sheet having uniform and fine cells can be manufactured.

(Aspect 7)

In Aspect 5 or 6, the extrusion device extrudes the plastic composition from the outlet port of the flow path of the flow path forming device to manufacture a molded product including 90 mass percent or more of a biodegradable resin.

According to Aspect 7, as described in the embodiment, a molded product having good biodegradability can be manufactured.

(Aspect 8)

In Aspect 7, the biodegradable resin includes polylactic acid.

According to Aspect 8, as described in the embodiment, a molded product can be obtained which have a melting point, toughness, chemical resistance, and the like, that are higher than those of other biodegradable plastics.

(Aspect 9)

In Aspect 9, a foamed plastic sheet is molded by the extrusion device according to any one of Aspects 6 to 8.
According to Aspect 9, as described in the embodiment, a foamed plastic sheet can be obtained which has good appearance and in which thickness unevenness is prevented.

**Claims**

1. A flow path forming device (5), comprising:

   a first flow path forming member (10) having a first flow path forming surface (40); and
   a second flow path forming member (20) having a second flow path forming surface (50),
   wherein the first flow path forming surface (40) of the first flow path forming member (10) and the second flow path forming surface (50) of the second flow path forming member (20) form a flow path (30) through which a plastic composition flows, and
   when a water droplet is deposited on a droplet deposition surface of each of the first flow path forming surface (40) and the second flow path forming surface (50), where the droplet deposition surface is in a range from an outlet port of the flow path (30) to 3 mm upstream in a flow direction of the plastic composition, and the droplet deposition surface on which the water droplet is deposited is tilted from a state parallel to a horizontal direction to a state parallel to a vertical direction, to measure a maximum droplet weight at which the water droplet does not slide down from the droplet deposition surface, an average value of the maximum droplet weight on the first flow path forming surface (40) and the maximum droplet weight on the second flow path forming surface (50) is 8 $\mu$g or more and 25 $\mu$g or less.

2. The flow path forming device (5) according to claim 1, wherein the average value of the maximum droplet weight on the first flow path forming surface (40) and the maximum droplet weight on the second flow path forming surface (50) is 10 $\mu$g or more and 15 $\mu$g or less.

3. The flow path forming device (5) according to claim 1 or 2, wherein at least one of the first flow path forming surface (40) and the second flow path forming surface (50) has a contact angle with water of 55° or more and less than 110°.

4. The flow path forming device (5) according to any one of claims 1 to 3, wherein at least one of the first flow path forming surface (40) and the second flow path forming surface (50) has an arithmetic mean roughness Ra of less than 1.5 and a roughness curve element average length Rsm of 60 $\mu$m or more.

5. An extrusion device (110) comprising:

   the flow path forming device (5) according to any one of claims 1 to 4,
   wherein the extrusion device extrudes a plastic composition from the outlet port of the flow path (30) of the flow path forming device (5).

6. The extrusion device (110) according to claim 5, wherein the extrusion device extrudes at least one type of nonflammable gas and the plastic composition from the outlet port of the flow path (30) of the flow path forming device (5) at a temperature lower than a melting point of the plastic composition to manufacture a foamed plastic.

7. The extrusion device (110) according to claim 5 or 6, wherein the extrusion device extrudes the plastic composition from the outlet port of the flow path (30) of the flow path forming device (5) to manufacture a molded product including 90 mass percent or more of a biodegradable resin.

8. The extrusion device (110) according to claim 7, wherein the biodegradable resin comprises polylactic acid.

9. A foamed plastic sheet (4) molded by the extrusion device (110) according to any one of claims 6 to 8.

# FIG. 1

# FIG. 2

COMPRESSIBLE
FLUID

PELLET

a    b    c    d    e

EP 4 470 746 A1

# FIG. 3

# FIG. 4A

# FIG. 4B

Europäisches
Patentamt

European
Patent Office

Office européen
des brevets

# EUROPEAN SEARCH REPORT

Application Number

EP 24 17 5722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 43 04 281 A1 (FUJI PHOTO FILM CO LTD [JP]) 2 September 1993 (1993-09-02) <br> * page 9, lines 45-60 * <br> * claims 1-10 * <br> * figures 1-7 * <br> ----- | 1,2,4,5 | INV. <br> B29C48/32 <br> B29C48/30 <br> B29C48/09 <br> B29C44/20 <br> B29C48/92 |
| X,P | EP 4 249 209 A1 (RICOH CO LTD [JP]) 27 September 2023 (2023-09-27) <br> * examples 1-9 * <br> * claims 1-13 * <br> * figure 1 * <br> ----- | 1-9 | ADD. <br> B29C44/34 <br> B29C44/60 |
| X | JP 2 896832 B2 (SEKISUI PLASTICS) 31 May 1999 (1999-05-31) <br> * claims 1-2 * <br> * figures 1-2 * <br> ----- | 1-9 | |
| A | ANONYMOUS MOHAMADREZA ET AL: "Determination of the Sliding Angle of Water Drops on Surfaces from Friction Force Measurements - PMC", LANGMUIR, [Online] vol. 38, no. 6, 15 February 2022 (2022-02-15), pages 2132-2136, XP093207829, US ISSN: 0743-7463, DOI: 10.1021/acs.langmuir.1c03206 Retrieved from the Internet: URL:https://www.ncbi.nlm.nih.gov/pmc/artic les/PMC8851890/> [retrieved on 2024-09-23] * figure 3 * <br> ----- | 1-9 | TECHNICAL FIELDS SEARCHED (IPC) <br><br> B29C |

The present search report has been drawn up for all claims

| Place of search | Date of completion of the search | Examiner |
|---|---|---|
| Munich | 9 October 2024 | Ngwa, Walters |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5722

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2024

| Patent document cited in search report | | Publication date | Patent family member(s) | | Publication date |
|---|---|---|---|---|---|
| DE 4304281 | A1 | 02-09-1993 | DE | 4304281 A1 | 02-09-1993 |
| | | | JP | 2684485 B2 | 03-12-1997 |
| | | | JP | H05220437 A | 31-08-1993 |
| EP 4249209 | A1 | 27-09-2023 | EP | 4249209 A1 | 27-09-2023 |
| | | | US | 2023302707 A1 | 28-09-2023 |
| JP 2896832 | B2 | 31-05-1999 | JP | 2896832 B2 | 31-05-1999 |
| | | | JP | H0740418 A | 10-02-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2896832 B